## Europäisches Patentamt

## European Patent Office

## Office européen des brevets

(19)

(11) Veröffentlichungsnummer: **0 368 047**

**A2**

(12) # EUROPÄISCHE PATENTANMELDUNG

(21) Anmeldenummer: **89119372.4**

(22) Anmeldetag: **19.10.89**

(51) Int. Cl.5: **E01B 27/00, B65G 23/08**

(30) Priorität: **05.11.88 DE 8813859 U**
**18.07.89 DE 8908699 U**

(43) Veröffentlichungstag der Anmeldung:
**16.05.90 Patentblatt 90/20**

(84) Benannte Vertragsstaaten:
**AT CH DE FR GB IT LI**

(71) Anmelder: **Hermann Wiebe Grundstücks- und**
**Maschinenanlagen KG**
**Hollerallee 29**
**D-2800 Bremen(DE)**

(72) Erfinder: **Keller, Heinrich**
**Leharstrasse 6/19**
**A-4020 Linz(AT)**

(74) Vertreter: **Hofinger, Engelbert et al**
**Torggler-Hofinger Wilhelm-Greil-Strasse 16**
**A-6020 Innsbruck(AT)**

(54) **Bandfördereinrichtung.**

(57) Bandfördervorrichtung, insbesondere für einen schienengängigen Transportwagen, bei dem die Bandfördervorrichtung (3) über die Puffer auskragt, mit einer endlosen Förderbandeinheit (5), mit zwei an Lagern drehbar gelagerten Umlenkvorrichtungen (6,7), um die die Förderbandeinheit (5) geführt ist, und mit wenigstens einer Antriebseinheit, die über eine der beiden Umlenkvorrichtungen die Förderbandeinheit (5) antreibt. Erfindungsgemäß ist die die Förderbandeinheit (5) antreibende Umlenkvorrichtung (7) im wesentlichen symmetrisch zu einer auf ihre Drehachse (10) senkrechte Mittelebene ausgebildet. Beiderseits in den äußeren Randbereichen der Umlenkvorrichtungen (7) sind zwei gleichartige Antriebseinheiten (8,9) vorgesehen, die zusammen mit den Lagern (16) innerhalb dieser angetriebenen, drehbaren Umlenkvorrichtung (7) koaxial zu dieser angeordnet sind.

Fig.3

Die Erfindung betrifft eine Bandfördervorrichtung, insbesondere für einen schienengängigen Transportwaggon, bei dem die Bandfördervorrichtung über die Puffer auskragt, mit einer endlosen Förderbandeinheit, mit zwei an Lagern drehbar gelagerten Umlenkvorrichtungen, um die die Förderbandeinheit geführt ist, und mit wenigstens einer Antriebseinheit, die über eine der beiden Umlenkvorrichtungen die Förderbandeinheit antreibt.

Derartige Bandfördervorrichtungen kommen in schienengebundenen Transportwaggons zum Einsatz, um Schüttgut innerhalb des Transportwaggons in Waggonlängsrichtung zu fördern und an einen Folgewaggon weiterzugeben. Dazu steigt die Bandfördereinrichtung über die Waggonlänge an und kragt über die Puffer so weit aus, daß eine Materialübergabe an den Folgewaggon möglich ist. Dabei ist man an einer kurzen Zuglänge (geringe Baustellengleislängen-Inanspruchnahme) bei gleichzeitig hoher Bunkerkapazität interessiert. Es ist deshalb günstig, die von den Bahnen vorgeschriebene Profilvorgabe, insbesondere die Breite, optimal auszunützen und die sich über die Waggonlänge erstreckende Förderbandeinheit möglichst breit auszubilden. Bei bekannten Bandfördervorrichtungen kann die zur Verfügung stehende Profilbreite jedoch nicht optimal ausgenutzt werden, da innerhalb der Profilbreite auch noch die seitlich neben den drehbaren Umlenkvorrichtungen angeordneten Lager und Antriebseinheiten innerhalb der vorgegebenen Profilbreite untergebracht werden müssen. Das Problem ist bei Transportwaggons, bei denen die Bandfördervorrichtung über die Puffer vorsteht, noch größer, weil am Austragende, wo günstigerweise die Antriebeinheiten vorgesehen sind, die größte vorgegebene Profileinschränkung, also die geringste zur Verfügung stehende Breite vorliegt.

Aufgabe der Erfindung ist es, eine robuste, hoch belastbare Bandfördereinrichtung der eingangs genannten Gattung zu schaffen, die bei vorgegebener Gesamtbreite eine möglichst große Breite der endlos umlaufenden Förderbandeinheit erlaubt.

Dies wird gemäß der Erfindung dadurch erreicht, daß die die Förderbandeinheit antreibende Umlenkvorrichtung im wesentlichen symmetrisch zu einer auf ihre Drehachse senkrechte Mittelebene ausgebildet ist und beiderseits in den äußeren Randbereichen zwei gleichartige Antriebseinheiten aufweist, die zusammen mit den Lagern innerhalb dieser angetriebenen, drehbaren Umlenkvorrichtung koaxial zu dieser angeordnet sind.

Durch die innerhalb der Breite der angetriebenen Umlenkvorrichtung angeordneten Lager und Antriebseinheiten kann die Gesamtbreite der Bandfördervorrichtung bis auf ohne weiteres schmal auszubildende, seitliche Halteschilder auf die Breite der Umlenkvorrichtungen bzw. der Förderbandeinheiten reduziert werden. Unter "Förderbandeinheit" wird dabei die gesamte, endlos umlaufende Einheit verstanden, die als wesentlichen Bestandteil das eigentliche Förderband (Gummigurt) aufweist. Zur Förderbandeinheit zählen beispielsweise auch quer zur Förderrichtung angeordnete und das Förderband unterstützende Tragkörper, sowie beidseitig des Förderbandes laufende Rollenketten, die mit den Tragkörpern verbunden sind. Es ist prinzipiell jedoch auch möglich, daß die Förderbandeinheit aus einem Förderband alleine besteht, welches um zylindrische Umlenkvorrichtungen umgelenkt und kraftschlüssig angetrieben wird. Im oben genannten günstigen Fall, wo die Förderbandeinheit neben dem Gummigurt Tragkörper und beiderseits des Gummigurtes laufende Rollenketten aufweist, wird man günstigerweise an den Umlenkvorrichtungen außen liegende Kettenräder anbringen, um die Förderbandeinheit formschlüssig anzutreiben bzw. umzulenken.

Innenliegende Trommelmotoren für den Antrieb von Förderbandeinheiten sind an sich bekannt. Allerdings sind die bekannten angetriebenen Umlenktrommeln jeweils nur von einem einseitig gelagerten Motor angetrieben. Die aus der DE-OS 35 38 173 bekannte Antriebstrommel ist um feststehende Trommelwellenzapfen gelagert. An einem dieser Trommelwellenzapfen ist der innenliegende Elektromotor befestigt, an dem der Mantel eines Planetengetriebes drehbar gelagert ist. Die erfindungsgemäße beidseitige Anordnung von Antriebseinheiten, die eine robuste Lagerung und einen kräftigen Antrieb für eine breite Förderbandeinheit erlaubt, ist mit der aus der DE-OS 35 38 173 bekannten Konstruktion nicht möglich, weil der zweite Trommelwellenzapfen Reaktionsmomente aus dem Planetengetriebe nach außen übertragen muß. Bei einer beidseitigen Anordnung könnte das Reaktionsmoment also nicht abgefangen werden. Auch in der DE-OS 26 49 648 ist lediglich eine durch einen Motor angetriebene Antriebstrommel gezeigt, die nur einseitig an einer festen Unterstützung gelagert ist und nur für geringe Lasten geeignet ist.

In der Praxis ist es günstig, die die Förderbandeinheit antreibende Umlenkvorrichtung - wie an sich bekannt - als im wesentlichen zylindrische Antriebstrommel auszubilden, in deren Innerem neuerungsgemäß beidseitig die Antriebseinheiten und Lager angeordnet sind. Als Antriebseinheiten eignen sich insbesondere Hydromotoren mit angeschlossenen Planetengetrieben, die bereits die zur drehbaren Lagerung der angetriebenen Umlenkvorrichtung nötigen Lager enthalten.

Konstruktiv günstig ist eine bevorzugte Ausführungsform, bei der sich auf beiden Seiten der angetriebenen, im we sentlichen trommelförmigen Umlenkvorrichtung von neben diesen liegenden Befestigungen aus jeweils eine im wesentlichen zylindrisch ausgebildete Halterung ins Innere der Umlenktrommel erstreckt, wobei in jeder der beiden Halterungen ein Motor befestigt ist und jede der beiden Halterungen an ihrem, von der Befestigung abgewandten Endbereich Lager für die Umlenktrommel aufweist bzw. solche Lager unterstützt. Diese zylindrische Halterungen können außen an flachschildartigen Befestigungen angeschweißt sein und nach innen bis in ein Planetengetriebe reichen und dort die Lager der Umlenktrommel tragen sowie Reaktionsmomente aus dem innenliegenden Planetengetriebe an die außenliegende Befestigung übertragen.

Weitere Vorteile und Einzelheiten der Erfindung werden in der folgenden Figurenbeschreibung näher erläutert.

Die Fig. 1 zeigt eine Seitenansicht auf einen Transportwaggon mit einer neuerungsgemäßen Bandfördervorrichtung,

die Fig. 2 zeigt eine Draufsicht auf den in Fig. 1 dargestellten Transportwaggon und

die Fig. 3 einen teilweise weggebrochenen Horizontalschnitt durch den rechten Endbereich der die Förderbandeinheit antreibenden Umlenkvorrichtung.

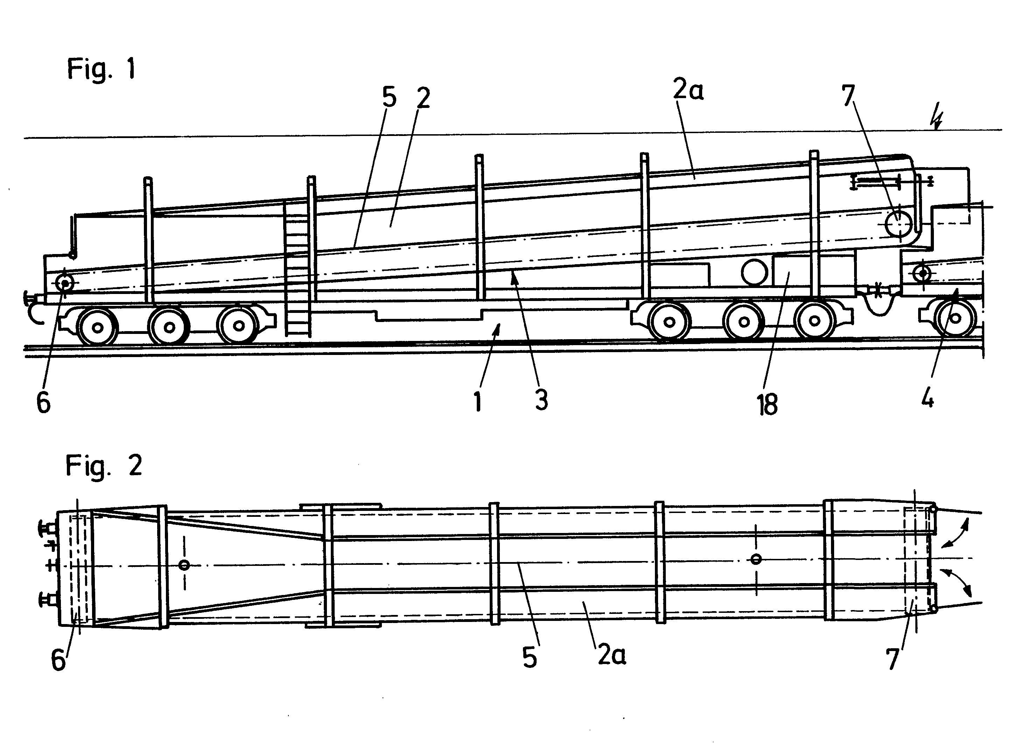

Der in Fig. 1 dargestellte Transportwaggon weist einen von seitlichen Wänden 2 mit oben eingeschrägten Bereichen 2a begrenzten Bunker auf, dessen Boden von der erfindungsgemäßen Bandfördervorrichtung 3 gebildet wird. Diese Bandfördervorrichtung 3 steigt vom in Fig. 1 links liegenden Beladeende bis zum in Fig. 1 rechts liegenden Austragende schräg nach oben an und kragt über die Puffer vor, um eine Materialübergabe an den nur teilweise dargestellten Folgewagen 4 zu ermöglichen.

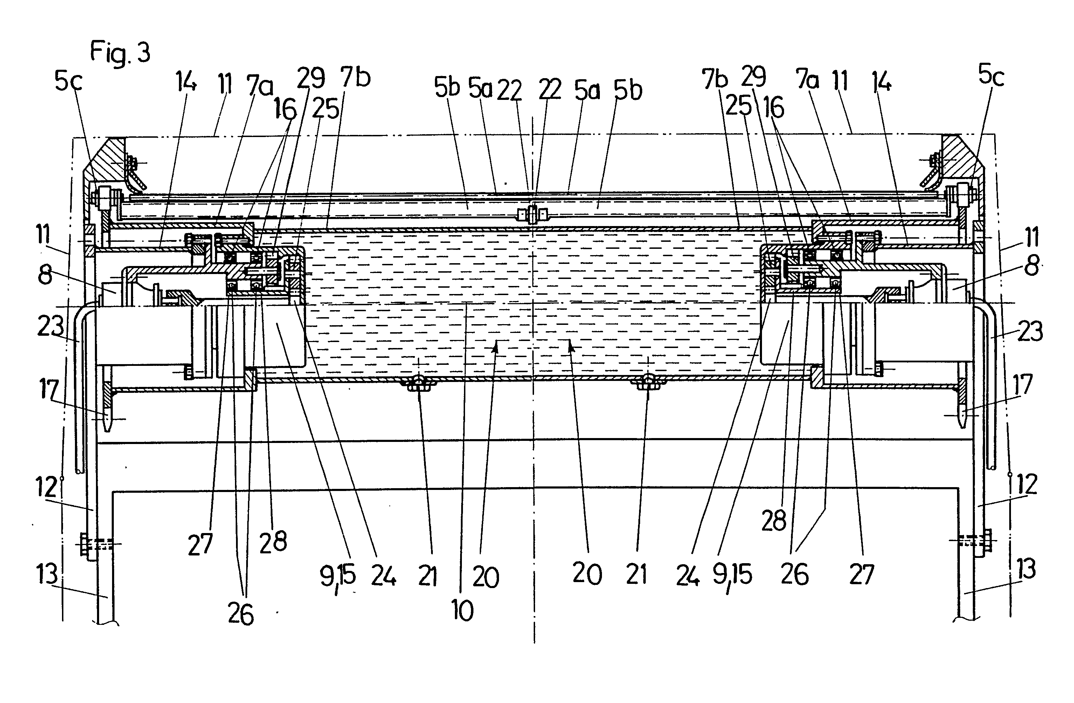

Die in den Fig. 1 und 2 schematisch dargestellte Bandfördervorrichtung besteht im wesentlichen aus der endlos umlaufenden Förderbandeinheit 5, den beiden drehbar gelagerten Umlenkvorrichtungen 6 und 7, um die die Förderbandeinheit 5 geführt ist, und den Antriebseinheiten in der Umlenkvorrichtung 7 (vgl. Fig. 3). Die am Austragende angeordnete Umlenkvorrichtung 7 treibt dabei die Förderbandeinheit 5 an.

Die beim vorliegenden Ausführungsbeispiel aus Ölmotor 8 und Planetengetriebe 9 bestehenden Antriebseinheiten sind innerhalb der die Förderbandeinheit 5 antreibenden, drehbaren Umlenkvorrichtung 7 koaxial zu dieser angeordnet, wie dies aus Fig. 3 ersichtlich ist. Neuerungsgemäß ist die Umlenkvorrichtung 7 bezüglich einer auf die Drehachse 10 senkrechten Mittelebene symmetrisch ausgebildet, weist also beidseitig jeweils einen Ölmotor 8 und ein angeschlossenes Planetengetriebe 9 auf.

Der erfindungsgemäße Antrieb der Förderbandeinheit 5 am Austragende durch in der Umlenkvorrichtung 7 innenliegende Antriebseinheiten 8,9 ermöglicht trotz der von den Bahnen am Austragende vorgegebenen Profileinschränkung (strichpunktierte Linie 11 in Fig. 3) eine große Breite der Förderbandeinheit 5 und auch unter hohen Belastungen einen zuverlässigen Antrieb derselben. Seitlich neben der drehbaren Umlenkvorrichtung 7, deren Breite im wesentlichen der Breite der Förderbandeinheit 5 entspricht, sind nur mehr schmale Schilder 12 nötig, um die Antriebseinheiten am Waggonrahmen 13 zu befestigen und die Umlenkvorrichtungen zu lagern bzw. zu halten.

Im folgenden wird nur die linke Seite der Fig. 3 beschrieben. Die rechte Seite ist symmetrisch ausgebildet.

Am Schild 12 ist eine zylindrische Halterung 14 für den Ölmotor 8 angeschweißt, die sich vom Schild 12 aus ins Innere der trommelförmigen Umlenkvorrichtung 7 erstreckt. Der Ölmotor 9 wird über eine Rohrleitung 23 mit unter Druck stehenden Hydrauliköl versorgt. An den Ölmotor ist ein Planetengetriebe 9 angeschlossen, dessen im wesentlichen zylindrischer Mantel 15 mit den die drehbare Umlenkvorrichtung 7 bildenden, zylindrischen Trommeln 7a und 7b leicht verschiedenen Durchmessers verbunden ist und um die im Endbereich der Halterung 14 angeordneten Lager 16 drehbar ist. Die Lager 16 bilden somit die zur drehbaren Lagerung der als Antriebstrommel 7a,7b ausgebildeten Umlenkvorrichtung nötigen Lager. Das Planetengetriebe 9 weist ein über die Motorwelle 27 angetriebenes Sonnenrad 24 auf, das mindestens ein Planetenrad 25 antreibt. Dieses Planetenrad 25 ist an einem um die Lager 26, welche sich am Ende der Halterung 14 abstützen, drehbaren Planetenrahmen 28 drehbar gelagert. Dieser Planetenrahmen 28 steht über einem Zwischenrad 29 mit der Innenseite des Mantels 15 des Planetengetriebes 9 in Verbindung. Das Zwischenrad 29 ist an der Halterung 14 drehbar gelagert. Die Halterung 14 hält also nicht nur den Motor 8 und trägt die Lager 16 und 26, sondern führt auch Reaktionsmomente aus dem Planetengetriebe 9 an das feste Schild 12. Insgesamt treibt der Ölmotor 8 den Mantel 15 des Planetengetriebes 9 und damit die Antriebstrommel 7a,7b an.

Bei dem in Fig. 3 dargestellten Ausführungsbeispiel besteht die Förderbandeinheit 5 aus einem Förderband 5a (Gummigurt), das von quer zur Förderrichtung laufenden Tragkörpern 5b unterstützt ist,und aus beiderseits des Förderbandes 5a laufenden Rollenketten 5c, die mit den Tragkörpern 5b verbunden sind und deren Rollen auf nicht dargestellten waggonfesten Laufschienen laufen. Der Antrieb der Förderbandeinheit 5 erfolgt über beiderseits außen an der Antriebstrommel 7a,7b angeordnete Zahnkränze 17, welche die beiderseits des Förderbandes 5a liegenden Rollenketten 5c antreiben. Die Tragkörper 5b weisen in der Mitte Tragrollen 22 auf, welche im Bereich des hier nicht dargestellten Obertrums auf einer mittleren Schiene laufen. Der Durchmesser der Antriebstrommel ist im Bereich 7b etwas reduziert, um für die Tragrollen 22 Platz zu schaffen.

Der Antriebstrommelbereich 7b ist mit einer über einen Einfüllstutzen 21 einfüllbaren Kühlflüssigkeit 20 teilweise gefüllt, um eine bessere Wärmeabfuhr von den Antriebseinheiten 8,9 zu gewährleisten.

Selbstverständlich ist die Erfindung nicht auf das dargestellte Ausführungsbeispiel beschränkt. Beispielsweise sind auch einfachere Förderbandeinheiten, die lediglich aus einem kraftschlüssig angetriebenen Förderband bestehen, durchaus denkbar und möglich. Zum Antrieb der Umlenkvorrichtung eignen sich neben Ölmotoren 8, die von Dieselmotoren 18 unter Druck gesetzem Hydrauliköl angetrieben werden, beispielsweise auch Elektromotoren.

**Ansprüche**

1. Bandfördervorrichtung, insbesondere für einen schienengängigen Transportwaggon, bei dem die Bandfördervorrichtung über die Puffer auskragt, mit einer endlosen Förderbandeinheit, mit zwei an Lagern drehbar gelagerten Umlenkvorrichtungen, um die die Förderbandeinheit geführt ist, und mit wenigstens einer Antriebseinheit, die über eine der beiden Umlenkvorrichtungen die Förderbandeinheit antreibt, dadurch gekennzeichnet, daß die die Förderbandeinheit (5) antreibende Umlenkvorrichtung (7) im wesentlichen symmetrisch zu einer auf ihre Drehachse (10) senkrechte Mittelebene ausgebildet ist und beiderseits in den äußeren Randbereichen zwei gleichartige Antriebseinheiten (8,9) aufweist, die zusammen mit den Lagern (16) innerhalb dieser angetriebenen, drehbaren Umlenkvorrichtung (7) koaxial zu dieser angeordnet sind.

2. Bandfördereinrichtung nach Anspruch 1, dadurch gekennzeichnet, daß die die Förderbandeinheit (5) antreibende Umlenkvorrichtung (7) eine im wesentlichen zylindrische Antriebstrommel (7a,7b) aufweist,in deren Innerem die Antriebseinheiten (8,9) und Lager (16) angeordnet sind.

3. Bandfördereinrichtung nach einem der Ansprüche 1 oder 2, dadurch gekennzeichnet, daß die Antriebseinheit(en) jeweils einen Hydromotor, insbesondere Ölmotor (8) aufweist bzw. aufweisen.

4. Bandfördereinrichtung nach einem der Ansprüche 1 bis 3, dadurch gekennzeichnet, daß an den Motor (8) der Antriebseinheiten jeweils ein Planetengetriebe (9) angeschlossen ist, das die Lager (16) enthält, an denen die angetriebene Umlenkvorrichtung (7) drehbar gelagert ist, wobei der im wesentlichen zylindrische, drehbar gelagerte Außenmantel (15) des Planetengetriebes (9) fest mit der Umlenkvorrichtung (7) verbunden ist.

5. Bandfördereinrichtung nach einem der Ansprüche 1 bis 4, dadurch gekennzeichnet, daß die Antriebseinheiten (8,9) jeweils an einem flachen Schild (12) befestigt sind, das sich seitlich knapp neben der Förderbandeinheit (5) in Förderrichtung erstreckt.

6. Bandfördereinrichtung nach einem der Ansprüche 1 bis 5, dadurch gekennzeichnet, daß sich auf beiden Seiten der angetriebenen, im wesentlichen trommelförmigen Umlenkvorrichtung (7) von neben diesen liegenden Befestigungen (12) aus jeweils eine im wesentlichen zylindrisch ausgebildete Halterung (14) ins Innere der Umlenktrommel (7) erstreckt, wobei in jeder der beiden Halterungen (14) ein Motor (8) befestigt ist und jede der beiden Halterungen (14) an ihrem, von der Befestigung (12) abgewandten Endbereich Lager (16) für die Umlenktrommel aufweist bzw. solche Lager (16) unterstützt.

7. Bandfördereinrichtung nach Anspruch 4 und Anspruch 6, dadurch gekennzeichnet, daß jede der beiden Halterungen (14) bis in das an den Motor (8) angeschlossene, innenliegende Planetengetriebe (9) reicht und die dortigen Lager (16,26) trägt bzw. unterstützt sowie Reaktionsmomente aus dem Planetengetriebe (9) an die jeweilige Befestigung (12) überträgt.

8. Bandfördereinrichtung nach Anspruch 6 oder Anspruch 7, dadurch gekennzeichnet, daß die Halterungen (14) jeweils an den vorzugsweise flachschildartigen Befestigungen (12) angeschweißt sind.

9. Bandfördereinrichtung nach einem der Ansprüche 1 bis 8, dadurch gekennzeichnet, daß die Förderbandeinheit (5) einen Gummigurt (5a) aufweist, der von quer zur Förderrichtung liegenden Tragkörpern (5b) unterstützt ist, die mit beiderseits des Gummigurtes (5a) laufenden Rollenketten (5c) verbunden sind, und daß die Umlenkvorrichtungen (6,7) jeweils zwei außenliegende Kettenräder (17) zum Antrieb bzw. zur Umlenkung der beiden Rollenketten (5c) aufweisen.

10. Bandfördereinrichtung nach einem der Ansprüche 1 bis 9, dadurch gekennzeichnet, daß die angetriebene Umlenkvorrichtung (7) am Austragende angeordnet ist.

11. Bandfördereinrichtung nach einem der Ansprüche 1 bis 10, dadurch gekennzeichnet, daß die als im wesentlichen zylindrische Antriebstrommel (7a,7b) ausgebildete Umlenkvorrichtung (7) im Bereich der Antriebseinheiten (8,9) dicht abgeschlossen ist und mit einer von innen bis an die Antriebseinheiten (8,9) reichenden Kühlflüssigkeit vorzugsweise teilweise gefüllt ist.

Fig. 1

5  2          2a          7

2a

6        1   3        18        4

EP 0 368 047 A2

Fig. 2

6          5   2a        7

Fig. 3

EP 0 368 047 A2